Europäisches Patentamt

European Patent Office

Office européen des brevets

(11) Numéro de publication: **0 112 753**
**B1**

(12) **FASCICULE DE BREVET EUROPÉEN**

(45) Date de publication du fascicule du brevet:
08.04.87

(21) Numéro de dépôt: 83402343.4

(22) Date de dépôt: 05.12.83

(51) Int. Cl.⁴: **H 02 B 1/04,** H 02 G 3/26

(54) Embase de fixation propre à l'assujettissement d'une goulotte à un profilé, en particulier pour conducteur électrique.

(30) Priorité: 27.12.82 FR 8221907
16.09.83 FR 8314758

(43) Date de publication de la demande:
04.07.84 Bulletin 84/27

(45) Mention de la délivrance du brevet:
08.04.87 Bulletin 87/15

(84) Etats contractants désignés:
AT BE CH DE GB IT LI NL SE

(56) Documents cité:
DE-A-2 717 216
FR-A-2 211 993
FR-A-2 371 074

(73) Titulaire: LEGRAND, 128 Avenue du Maréchal de Lattre de Tassigny, F-87045 Limoges Cédex (FR)

(72) Inventeur: Sarton, François, La Pierre, F-76890 Fotes (FR)
Inventeur: Roby, Gérard, Immeuble Lyonnais Rue Boieldieu, F-76420 Bihorel (FR)
Inventeur: Gosse, Marc, St Georges sur Fontaine, F-76690 Cleres (FR)
Inventeur: Cheron, Jacques, Fontaine le Bourg, F-76690 Cleres (FR)

(74) Mandataire: CABINET BONNET- THIRION, 95 Boulevard Beaumarchais, F-75003 Paris (FR)

## Description

La présente invention concerne d'une manière générale les goulottes du type de celles couramment mises en oeuvre pour le guidage de conducteurs électriques dans les armoires électriques, c'est-à-dire dans les armoires ou coffrets servant aux logements de quelconques appareillages électriques.

De telles goulottes, qui sont par exemple réalisées en matière synthétique, ont de tradition une section transversale globalement en U, et, dans l'axe de leur fond, il est usuellement prévu, de place en place, à un pas régulier, des ouvertures propres à permettre le passage des organes de fixation nécessaires à leur assujettissement à un quelconque support.

Le plus souvent, ces ouvertures sont allongées en boutonnières, suivant l'axe du fond qu'elles affectent, notamment pour permettre l'ajustement en position d'une telle goulotte vis-à-vis du support sur lequel elle doit être rapportée.

La présente invention vise plus précisément l'assujettissement d'une goulotte de ce type à un support préalablement mis en place dans l'armoire électrique qu'elle doit équiper.

Le plus souvent, ce support est, à ce jour, une plaque perforée, en général métallique.

Il en résulte donc que, pour la mise en place de gaulottes, une armoire électrique doit normalement être équipée d'une telle plaque perforée.

Or, concurremment aux armoires électriques ainsi équipées d'une plaque perforée, il existe des armoires électriques qui, pour le support des appareillages électriques qu'elles doivent par ailleurs contenir, sont équipées d'un châssis formé par un réseau de profilés, en général métalliques, présentant globalement une section transversale à profil en U, des ailes munies de retours en équerre pour l'encliquetage des appareillages concernés.

Suivant des dispositions normalisées, ces ailes peuvent être de hauteurs égales l'une à l'autre, et leurs retours en équerre sont alors usuellement dirigés vers l'extérieur, en directions opposées l'un par rapport à l'autre, à un même niveau.

En variante, ces ailes peuvent être de hauteurs inégales l'une par rapport a l'autre, et leurs retours en équerre sont alors usuellement dirigés vers l'intérieur, en direction l'un de l'autre, mais à des niveaux différents.

Quoi qu'il en soit, à ce jour, une goulotte ne peut pas être aisément rapportée sur un tel profilé.

Dans le document DE-A-2.717.216, il est cependant proposé une embase de fixation permettant de rapporter, sur un profilé à retours en équerre dirigés en sens opposés, ou profilé en C, une barre conductrice à laquelle, d'un certain point de vue, peut être assimilé le fond d'une goulotte, une telle barre comportant, comme un tel fond, des ouvertures oblongues.

Cette embase de fixation comporte une platine, qui, d'une part, par sa face supérieure, forme un plan de repos sur lequel peut venir porter la barre conductrice concernée, avec, dans la zone médiane de ladite face supérieure, une saillie en T, qui, destinée à traverser ladite barre conductrice à la faveur d'une ouverture de celle-ci, est apte à agripper cette barre conductrice et à ainsi former pour elle un organe de fixation, et qui, d'autre part, présente, sur sa face inférieure, une autre saillie en T dont les bras forment en quelque sorte des dents de retenue aptes à coopérer avec les retours en équerre d'un même profilé pour la retenue de l'ensemble sur un tel profilé.

En pratique, les deux saillies en T que présente ainsi cette embase de fixation sont massives et rigides, d'un seul tenant avec elle, et, ladite embase de fixation étant donc monobloc, sa mise en oeuvre se fait par rotation d'un quart de tour, tant par rapport au profilé, que par rapport à la barre conductrice.

Outre qu'en raison des frottements importants qui se développent alors entre une telle embase de fixation, d'une part, et le profilé et la barre conductrice, d'autre part, le couple de rotation à développer pour cette mise en oeuvre doit lui-même être important, ladite mise en oeuvre est par elle-même relativement malaisée à conduire dans la mesure où elle intéresse simultanément le profilé, l'embase de fixation, et la barre conductrice, sans même que l'embase de fixation soit au préalable assujettie audit profilé, et sans même qu'on puisse en contrôler aisément le positionnement par rapport à ce dernier, cette embase de fixation étant alors cachée par la barre conductrice qui lui est superposée.

Cette difficulté est d'autant plus sérieuse que, le plus souvent, pour une même barre conductrice, plusieurs embases de fixation, convenablement échelonnées le long du profilé à équiper, sont à prévoir.

C'est sans doute la raison pour laquelle l'embase de fixation en cause est en outre dotée d'un talon conique, qui, pour en contrôler le positionnement par rapport au profilé à équiper, vient traverser une ouverture prévue pour lui dans le fond de ce profilé, ce qui interdit en pratique de mettre en oeuvre des profilés standards, le fond de ceux-ci ne comportant pas usuellement de telles ouvertures.

Enfin, l'embase de fixation faisant ainsi l'objet du document DE-A-2.717.216 ne convient en pratique qu'à un seul type de profilé, à savoir un profilé à retours en équerre dirigés en sens opposés l'un par rapport à l'autre.

Dans le document FR-A-2.211.993, par contre, il est décrit un dispositif de fixatuon propre à permettre de rapporter sur n'importe quel type de profilé un quelconque organe électromagnétique ou électromécanique.

Mais il s'agit en pratique d'une simple barrette, elle aussi monobloc, dont la mise en oeuvre se fait exclusivement par encliquetage, tant par rapport au profilé que par rapport à l'organe à rapporter sur celui-ci, et dont l'assujettissement à un tel profilé peut parfois manquer de sûreté, son emprise sur celui-ci étant limitée.

La présente invention a pour but de fournir une embase de fixation propre à permettre de manière très simple, rapide et sûre l'assujettissement d'une goulotte à un quelconque profilé à ailes munies de retours en équerre.

L'embase de fixation qui en fait l'objet pour satisfaire à ce but est du genre comportant une platine, qui, par sa face supérieure, forme un plan de repos sur lequel peut venir porter par son fond une goulotte, et qui, dans la zone médiane de ladite face supérieure, présénte des moyens propres à l'intervention d'un organe de fixation, qui, destiné à traverser le fond de ladite goulotte à la faveur d'une ouverture de celui-ci, forme un verrou à tourner d'un quart de tour et présente transversalement deux bras disposés transversalement dans le prolongement l'un de l'autre par lesquels il est apte à agripper ledit fond, et au moins deux dents de retenue, qui, disposées sur la face inférieure de ladite platine, sont aptes à coopérer avec les retours en équerre d'un même profilé, et est caractérisée en ce que l'une au moins desdites dents de retenue est portée par une languette élastiquement déformable, les moyens que présente la platine pour l'intervention d'un organe de fixation sont constitués par un puits établi sensiblement perpendiculairement à la face supérieure de ladite platine, et, par son pied, le verrou que forme ledit organe de fixation est adapté à être rotatif dans ledit puits, ledit verrou etant la seule portion de l'ensemble à être ainsi destinée à être rotative.

Un simple tournevis suffit avantageusement à la mise en oeuvre de ce verrou, et, celui-ci, prévu à l'avance sur l'embase de fixation, ne nécessite aucune manipulation particulière pour sa mise en place.

En pratique un tel verrou est préférentiellement attenant à la platine à laquelle il est associé, c'est-à-dire assujetti à demeure à cette platine.

Par exemple, il peut être dès l'origine monté rotatif dans le puits de celle-ci.

Mais, en variante, il peut être d'un seul tenant avec la platine, en n'étant rattaché à celle-ci que par des moyens de liaison, ponctuels ou continus, défonçables.

L'ensemble est alors venu d'une seule pièce par moulage d'une quelconque matière synthétique appropriée, et, pour la mise en oeuvre du verrou, il suffit, préalablement à sa rotation, d'en assurer un enfoncement dans le puits auquel il est associé, avec rupture concomitante des moyens de liaison défonçables le reliant jusque là à celui-ci.

Même lorsqu'il est ainsi pratiqué sur les lieux mêmes d'utilisation de l'embase de fixation suivant l'invention, un tel enfoncement est en pratique très facile à assurer, à la main ou à l'aide d'un outil simple, tel que marteau ou tournevis.

Dans tous les cas, l'embase de fixation suivant l'invention peut avantageusement être mise en place par avance sur le profilé à équiper, indépendamment de la goulotte à y rapporter, son assise sur un tel profilé est relativement ample, et donc sûre, et, n'intéressant que son seul verrou, la rotation à assurer pour y assujettir ladite goulotte ne nécessite le développement que d'un couple de rotation avantageusement limité.

Dans tous les cas, également, il est de préférence conféré une capacité de déformation à chacun des bras du verrou ainsi mis en oeuvre.

Par exemple, un tel bras peut présenter, une portion élastiquement déformable, avec, sur sa face inférieure, une rampe globalement oblique vis-à-vis de l'axe du pied associé.

Outre que les rampes obliques que présente ainsi le verrou en facilitent avantageusement, lors de sa rotation, l'engagement sur le fond de la goulotte à agripper, la portion élastiquement déformable de ses bras permet avantageusement, de manière très simple, une absorption d'éventuelles tolérances de fabrication, et, notamment, une compensation d'éventuelles différences d'épaisseur pour le fond de la goulotte à fixer, tout en assurant, élastiquement, un assujettissement ferme de celle-ci à son support.

En variante, et dans le même but, il peut être prévu, sur la face inférieure de chacun des bras du verrou, un voile de faible épaisseur, qui relie ce bras au pied associé, et qui est déformable.

Corollairement, si, comme indiqué ci-dessus, l'une des dents de retenue mises en oeuvre est portée par une languette élastiquement déformable, ce qui facilite l'encliquetage, par simple déformation élastique, de l'embase de fixation suivant l'invention sur le profilé à équiper, et ce qui en facilite également, en retour, un désaccouplement éventuel par rapport à ce profilé si désiré, l'autre desdites dents de retenue est au contraire de préférence portée par une cloison rigide, ou semi-rigide, de la platine associée.

Une telle dent de retenue est dès lors à même d'assurer avantageusement, en combinaison avec la cloison qui la porte, une butée positive de l'embase de fixation suivant l'invention sur le profilé sur lequel elle est rapportée, ce qui, d'une part, précise la position d'implantation de cette embase de fixation sur ce profilé, et, d'autre part, lui confère une excellente tenue à l'arrachement par rapport à celui-ci.

Bien entendu, le caractère rigide, ou semi-rigide, de la cloison portant la dent de retenue en question n'est pas absolu.

Au contraire, si nécessaire, cette cloison peut, dans certaines limites, céder élastiquement, ce qui autorise avantageusement la mise en oeuvre de l'embase de fixation suivant l'invention sur des profilés de types différents.

A cet égard, l'embase de fixation suivant l'invention est de préférence équipée de deux paires de dents de retenue distinctes, pour deux types de profilé différents, l'un à retours en équerre dirigés en sens opposés, l'autre à retours en équerre dirigés dans le même sens, et, par sa capacité de déformation élastique, la cloison rigide ou semi-rigide portant l'une des dents de retenue de chacune des paires de celles-ci permet avantageusement, d'un type de profilé à l'autre, l'implantation de l'embase de fixation suivant l'invention sur des profilés de caractéristiques dimensionnelles différentes, comme cela est le cas pour les profilés à retours en équerre dirigés en sens opposés.

En bref, l'embase de fixation suivant l'invention permet avantageusement de rapporter une goulotte sur un quelconque profilé à l'aide d'un outil simple, d'assurer à cette goulotte sur ce profilé un plan de fixation bien déterminé, suivant un axe bien déterminé, quel que soit le type de ce profilé, et, ainsi d'un profilé à un autre, de disposer rigoureusement droite une telle goulotte, avec, pour celle-ci, une excellente résistance à l'arrachement.

Dans sa forme préférée de réalisation, elle ne fait de plus avantageusement intervenir que des éléments en matière synthétique, ce qui est garant de la pérennité de l'isolation recherchée, et, portant par elle-même tous les éléments nécessaires à sa mise en oeuvre, et notamment, l'organe de fixation propre à l'assujettissement de la goulotte à fixer, elle évite avantageusement toute recherche préalable dans un bac, et toute manipulation isolée, d'un quelconque autre organe de fixation.

Les caractéristiques et avantages de l'invention ressortiront d'ailleurs de la description qui va suivre, à titre d'exemple, en référence aux dessins schématiques annexés sur lesquels:

la figure 1 est une vue en perspective d'une embase de fixation suivant l'invention;

les figures 2, 3 en sont, à échelle supérieure, la première une vue en coupe longitudinale, suivant la ligne II-II de la figure 1, la deuxième une vue en coupe transversale, suivant la ligne III-III de cette figure 1, avant enfoncement du verrou qu'elle comporte;

la figure 4 reprend, à échelle supérieure, le détail de la figure 2 repéré par un encart IV sur cette figure 2;

la figure 5 est une vue en coupe longitudinale reprenant pour partie la figure 2, après enfoncement du verrou;

les figures 6A, 6B sont, à échelle différente, des vues en coupe longitudinale de l'embase de fixation suivant l'invention illustrant la mise en oeuvre de celle-ci sur un premier type de profilé;

les figures 7A, 7B sont des vues en perspective illustrant la mise en place d'une goulotte sur cette embase de fixation;

la figure 8 est une vue analogue à celle de la figure 6B, pour un autre type de profilé;

les figures 9 et 10 sont des vues partielles en perspective, qui, analogues à celle de la figure 1, se rapportent chacune respectivement à une variante de réalisation;

la figure 11 est une vue en perspective, qui, analogue à celle de la figure 1, se rapporte à une variante de réalisation de l'embase de fixation suivant l'invention, le verrou qu'elle comporte étant disposé enfoncé;

les figures 12, 13 sont des vues en coupe transversale de cette variante de réalisation suivant respectivement les lignes XII-XII et XIII-XIII de la figure 11;

les figures 14, 15 en sont des vues locales en coupe suivant respectivement les lignes XIV-XIV et XV-XV de la figure 12;

la figure 16 en est une vue de dessous, suivant la flèche XVI de la figure 13.

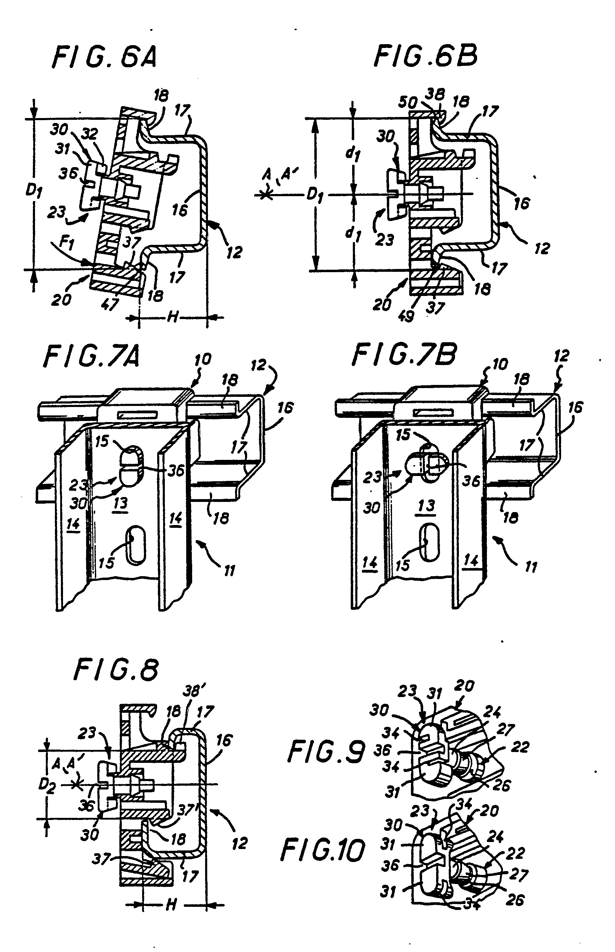

D'une manière générale, et tel qu'illustré sur ces figures, une embase de fixation 10 suivant l'invention est destinée à permettre l'assujettissement d'une quelconque goulotte 11 à un quelconque profilé 12, figures 7A, 7B.

Une telle goulotte 11, qui est par exemple destinée au guidage de conducteurs électriques, n'entre pas dans le cadre de la présente invention, et elle ne sera donc pas décrite en détail ici.

Il suffira de préciser que, réalisée par exemple en matière synthétique, elle comporte un fond 13 et deux ailes latérales 14, et a donc en section transversale un profil en U.

Tel que représenté, le fond 13 est, le long de son axe, usuellement ajouré, de place en place, selon un pas régulier, d'ouvertures 15 allongées en boutonnières suivant le dit axe.

Quant aux ailes 14, et suivant une disposition non représentée, elles peuvent présenter, transversalement, de place en place, suivant un pas régulier, des fentes, qui, courant à compter de leurs bords libres, sont propres au passage des conducteurs électriques concernés.

En variante, il peut s'agir de trous.

En variante, également, les ailes 14 de la goulotte 11 peuvent être à paroi pleine.

Le profilé 12 sur lequel une telle goulotte 11 doit être rapportée est lui aussi bien connu.

Suivant des dispositions normalisées, ce profilé 12 comporte un fond 16 et deux ailes 17 munies de retours en équerre 18 le long de leurs bords libres.

Dans la forme de mise en oeuvre illustrée sur les figures 6 et 7, les ailes 17 ont une même hauteur H, et leurs retours en équerre 18 sont dirigés vers l'extérieur, en directions opposées l'un par rapport à l'autre.

Il s'agit donc, dans ce cas, d'un profilé du type de ceux dits à section en forme de chapeau.

Sur les figures 6 à 7, il s'agit, plus précisément d'un profilé hors norme, mais d'utilisation courante, 35 X 15, qui, ainsi qu'on le sait, se distingue, notamment, d'un profilé normalisé (CEI) TH 35-15 par une distance plus grande entre ses ailes 17 et une épaisseur plus faible de celles-ci et de son fond 16.

Mais, dans l'un et l'autre cas, la distance D1 entre les bords libres des retours en équerre 18 est la même.

En variante, figure 8, le profilé 12 intéressé peut être un profilé dont les ailes 17 sont de hauteurs inégales, et dont les retours en équerre 18, ainsi établis à des niveaux différents, sont dirigés vers

l'intérieur, en direction l'un de l'autre.

Il s'agit donc, dans ce cas, d'un profilé du type de ceux dits à section en forme de G, G 32, normalisé (CEI).

La distance D2 entre les bords libres des retours en équerre 18 d'un tel profilé est alors différente de la distance D1 précédente, et est en pratique inférieure à celle-ci.

Par contre, la hauteur H de son aile 17 la plus haute, mesurée entre la face extérieure du retour en équerre 18 de celle-ci et la face extérieure de son bord 16, est égale à celle des ailes d'un profilé à section en forme de chapeau, mesurée dans les mêmes conditions.

De tels profilés à section en forme de chapeau ou à section en forme de G sont usuellement mis en oeuvre dans les armoires électriques pour le support de quelconques appareillages.

Ils sont alors rapportés par leur fond 16 sur des montants équipant à cet effet une telle armoire.

En pratique, le pas suivant lequel ces profilés sont ainsi rapportés sur des montants, apprécié par rapport à l'axe de leur ouverture, est identique au pas des ouvertures 15 d'une goulotte 11.

Par ouverture d'un profilé 12, on entend ici, de manière usuelle, le dégagement que, en projection transversale sur le fond 16 qu'elles encadrent, les ailes 17 d'un tel profilé, retours en équerre 18 compris, laissent libre entre elles.

L'axe A d'une telle ouverture se trouve donc, en pratique, au milieu des distances D1, D2 précisées ci-dessus, tel que schématisé sur les figures 6 et 8.

D'une manière générale, l'embase de fixation 10 suivant l'invention comporte une platine 20, de contour globalement rectangulaire, à angles arrondis, dans la forme de réalisation représentée.

Par sa face supérieure 21, qui est globalement plane, cette platine 20 forme un plan de repos sur lequel peut venir porter par son fond 13 une goulotte 11.

L'embase de fixation 10 suivant l'invention comporte, en outre, dans la zone médiane de la face supérieure 21 de sa platine 20, des moyens propres à l'intervention d'un organe de fixation qui, destiné à traverser le fond 13 d'une telle goulotte 11 à la faveur d'une ouverture 15 de celui-ci, est apte à agripper ledit fond 13.

En pratique, ces moyens sont constitués par un puits 22, établi sensiblement perpendiculairement à la face supérieure 21 de la platine 20.

Dans la forme préférentielle de réalisation représentée, l'organe de fixation 23 à mettre en oeuvre est attenant à la platine 20, c'est-à-dire assujetti à demeure à celle-ci, et il équipe donc dès l'origine en attente, l'embase de fixation 10 suivant l'invention, dans l'axe A' du puits 22 de ladite platine 20.

Il s'agit, en pratique, d'un verrou à tourner d'un quart de tour.

Le pied, ou fût, 24 de ce verrou est établi dans l'axe A' du puits 22 de la platine 20, et il est adapté à être rotatif dans celui-ci.

A cet effet, ce pied 24 présente, transversalement, à une distance $\underline{d}$ l'un de l'autre, deux épaulements 25, qui sont tournés l'un vers l'autre, et par lesquels il est apte à enserrer à rotation deux épaulements 26 prévus à cet effet de manière semblable, à une distance $\underline{d}$ l'un de l'autre, mais en sens opposés l'un par rapport à l'autre, sur la platine 20, et, plus précisément, sur le puits 22 équipant celle-ci, l'un de ces épaulements 26 étant en pratique formé par la tranche libre que présente à l'extérieur ce puits 22.

Celui des épaulements 25 du pied 24 du verrou 23 qui est le plus proche de l'extrémité libre de ce pied 24 est en pratique précédé, du côté de ladite extrémité libre, d'une surface tronconique d'engagement 27.

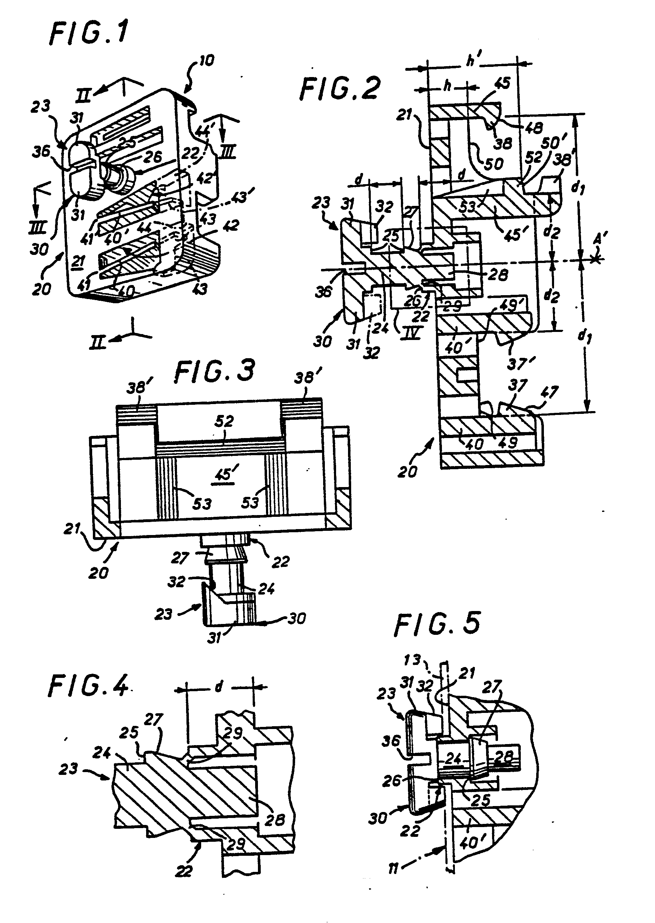

Tel que représenté sur les figures 1 à 4, le verrou 23 est d'un seul tenant avec la platine 20, l'ensemble étant en pratique venu par moulage d'une quelconque matière synthétique appropriée.

Le pied 24 du verrou 23 n'est dans ce cas rattaché à la platine 20 que par des moyens de liaison défonçables.

Dans la forme de réalisation représentée, et ainsi qu'il est mieux visible à la figure 4, ces moyens de liaison défonçables sont établis entre la tranche du puits 22 de la platine 20, d'une part, et la base de la surface tronconique d'engagement 27 du pied 24 du verrou 23, et il s'agit de moyens de liaison ponctuels, formés d'un nombre limité de bras ou pontets distincts 29.

En variante, il pourrait aussi bien s'agir d'un voile circulairement continu.

Quoi qu'il en soit, dans la forme de réalisation représentée, le pied 24 du verrou 23 présente un prolongement 28, de moindre diamètre, au-delà de sa surface tronconique d'engagement 27.

Par ailleurs, la tête 30 du verrou 23 a, en plan, c'est-à-dire perpendiculairement à l'axe A' du pied 24 d'un tel verrou 23, qui est en pratique confondu avec l'axe A' du puits 22 de la platine 20, un contour oblong complémentaire de celui des ouvertures 15 d'une goulotte 11.

Elle forme donc, transversalement, par rapport à l'axe A' du pied 24, deux bras 31 disposés dans le prolongement l'un de l'autre.

Dans les formes de réalisation représentées sur les figures 1 à 10, et suivant une disposition symétrique par rapport audit axe A', chacun de ces bras 31 présente, sur sa face inférieure, en regard de la platine 20, une rampe 32 globalement oblique vis-à-vis de cet axe A'.

De préférence, la rampe oblique 32 que présente ainsi chacun des bras 31 de ladite tête 30 du verrou 23 est formée sur une portion élastiquement déformable de ce bras 31.

Tel que représenté sur les figures 1 à 8, cette portion elastiquement déformable peut résulter du simple porte-à-faux des bras 31 par rapport au pied 24 du verrou 23 à compter duquel ils s'étendent.

En variante, figures 9 et 10, elle peut être séparée par une fente 34 de la partie courante d'un tel bras.

Suivant la forme de réalisation représentée à la figure 9, cette fente 34 s'étend parallèlement à l'axe A' du pied 24 du verrou 23, transversalement par rapport au bras 31 qu'elle affecte.

Suivant la forme de réalisation représentée sur la figure 10, elle s'étend perpendiculairement à l'axe A' du pied 24 du verrou 23, dans l'épaisseur même du bras 31 qu'elle affecte.

Quoi qu'il en soit, et tel que représenté, pour sa commande en rotation, la tête 30 du verrou 23 présente diamétralement une saignée 36.

Dans les formes de réalisation représentées sur les figures 1 à 10, cette saignée 36 s'étend transversalement, et elle débouche latéralement à l'extérieur à chacune de ses extrémités.

L'embase de fixation 10 suivant l'invention comporte enfin au moins deux dents de retenue 37, 38, qui, disposées sur la face inférieure de la platine 20, sont aptes à coopérer avec les retours en équerre 18 d'un même profilé 12, et dont une, au moins, la dent de retenue 37, est portée par une languette élastiquement déformable, désignée par la référence 40 dans les formes de réalisation représentées sur les figures 1 à 10.

En pratique, les deux dents de retenue 37, 38 ainsi prévues pour un même profilé 12 s'étendent chacune respectivement de part et d'autre du verrou constituant l'organe de fixation 23, transversalement par rapport à la platine 20.

En pratique, également, la languette élastiquement déformable 40 portant la dent de retenue 37 dans les formes de réalisation représentées sur les figures 1 à 10 s'étend elle aussi transversalement par rapport à la platine 20, en porte-à-faux à compter d'une zone d'enracinement 41 formant globalement pour elle une articulation d'axe parallèle à celui A' du pied 24 du verrou 23.

De préférence, cette languette élastiquement déformable 40 est accessible de l'extérieur de la platine 20.

Par exemple, et tel que représenté en trait plein sur les figures, elle affleure à la face supérieure 21 de la platine 20, et s'étend à la faveur d'un évidement 42 de celle-ci.

Elle est ainsi accessible par l'avant.

En outre, et tel que schématisé en traits interrompus à la figure 1, à son extrémité libre, la languette élastiquement déformable 40 peut comporter un prolongement 43, qui s'étend jusqu'au bord de la platine 20, et qui débouche à l'extérieur de celle-ci à la faveur d'une échancrure 44 de ce bord.

Abstraction faite de cette éventuelle échancrure 44, l'évidement 42 de la platine 20 a un contour fermé, pour que l'amoindrissement qui en résulte pour cette platine 20 soit minimal.

Corollairement, l'autre dent de retenue 38 est de préférence portée par une cloison rigide, ou semi-rigide, 45, de la platine 20.

S'agissant de dents de retenue destinées à coopérer avec un profilé symétrique, les dents de retenue 37, 38 sont dirigées l'une vers l'autre, la cloison rigide, ou semi-rigide, 45 portant la dent de retenue 38 forme un des bords transversaux de la platine 20, et la languette élastiquement déformable portant la dent de retenue 37 s'étend à proximité de l'autre de ces bords transversaux, sensiblement parallèlement à celui-ci.

En pratique, la cloison 45 et la languette élastiquement déformable 40, et donc les dents de retenue 37, 38 qu'elles portent, s'étendent l'une et l'autre à une même distance $d_1$ de l'axe A' du pied 24 du verrou 23, cette distance $d_1$ étant égale à la moitié de la distance D1 précisée ci-dessus.

De préférence, la dent de retenue 37, au moins, est précédée d'un bord d'engagement oblique 47.

De même, dans la forme de réalisation représentée, la dent de retenue 38 est précédée d'un bord d'engagement oblique 48.

Quoi qu'il en soit, aux dents de retenue 37, 38 il est associé, sur la face inférieure de la platine 20, parallèlement à la face supérieure 21 de celle-ci, des surfaces d'appui, respectivement 49, 50, par lesquelles cette platine 20 est adaptée à venir porter sur les retours en équerre 18 du profilé sur lequel elle doit être mise en place.

S'agissant de dents de retenue destinées à coopérer avec un profilé à section en forme de chapeau, ces surfaces d'appui 49, 50 sont coplanaires, et elles sont donc à une même distance $\underline{h}$ de la face supérieure 21 de la platine 20.

En pratique, dans les formes préférentielles de réalisation de l'embase de fixation 10 suivant l'invention représentées sur les figures, deux paires de dents de retenue sont prévues, pour deux types de profilé différents.

Outre les dents de retenue 37, 38 destinées à coopérer avec un profilé à section en forme de chapeau, il y est en effet prévu des dents de retenue 37', 38' destinées à coopérer avec un profilé à section en forme de G.

Dans les formes de réalisation représentées sur les figures 1 à 10, ces dents de retenue 37', 38' sont établies suivant une même direction de la platine 20 que les dents de retenue 37, 38 précédentes, en encadrant celles-ci.

Suivant des dispositions semblables à celles décrites ci-dessus, la dent de retenue 37' est portée par une languette élastiquement déformable 40', qui, à la faveur d'un évidement 42' de la platine 20, s'étend globalement transversalement par rapport à celle-ci à compter d'une zone d'enracinement 41' formant pour elle une articulation d'axe parallèle à l'axe A' du pied 24 du verrou 23, et qui affleure à la face supérieure 21 de cette platine 20, avec, éventuellement, un prolongement 43' dans une échancrure 44' du bord de celle-ci.

De même, la dent de retenue 38' est portée par une cloison 45', rigide ou semi-rigide, de la platine 20.

Mais, s'agissant de dents de retenue destinées à coopérer avec un profilé à section en forme de G, ces dents de retenue 37', 38' sont dirigées en sens opposés l'une par rapport à l'autre.

En pratique, et également comme précédemment, la cloison 45' et la languette élastiquement déformable 40' portant ces dents de retenue 37', 38' s'étendent l'une et l'autre à une même distance d₂ de l'axe A' du pied de verrou 23, cette distance $d_2$ étant égale à la moitié de la distance D2 précisée ci-dessus.

Enfin, à ces dents de retenue 37', 38' sont associées, parallèlement à la face supérieure 21 de la platine 20, des surfaces d'appui 49', 50'.

Dans la forme de réalisation représentée, les languettes élastiquement déformables 40, 40' portant les dents de retenue 37, 37' sont disposées d'un même côté du verrou formant l'organe de fixation 23, et, conjointement, les cloisons rigides ou semi-rigides 45, 45' portant les dents de retenue 38, 38' sont disposées de l'autre côté dudit verrou.

En outre, dans cette forme de réalisation, les surfaces d'appui 49, 49' associées aux dents de retenue 37, 37' sont dans le prolongement l'une de l'autre, en sorte que la surface d'appui 49' associée à la dent de retenue 37' est à une distance h de la face supérieure 21 de la platine 20.

Par contre, la surface d'appui 50' associée à la dent de retenue 38' est à une distance h' de cette face supérieure 21 différente de la distance h précédente et en pratique supérieure à celle-ci.

Dans la forme de réalisation représentée, cette surface d'appui 50' est formée à la face inférieure d'une baguette 52 que présente en saillie la cloison, rigide ou semi-rigide, 45' de la platine 20, parallèlement à la dent de retenue 38' associée, et, pour des commodités de moulage, cette dernière est fractionnée en deux tronçons distincts disposés chacun respectivement de part et d'autre des extrémités de cette baguette 52, ainsi qu'il est mieux visible à la figure 3.

Dans la forme de réalisation représentée, la baguette 52 est par ailleurs reliée à la cloison rigide ou semi-rigide 45' qui la porte, par des nervures de raidissement 53.

Si, tel qu'indiqué ci-dessus, le verrou 23 est initialement rattaché par des moyens de liaison défonçables à la platine 20, et plus précisément au puits 22 que présente celle-ci, il est d'abord procédé à son enfoncement, lorsque l'embase de fixation 10 suivant l'invention doit être mise en oeuvre.

Cet enfoncement peut si désiré être facilité par la mise en oeuvre d'un quelconque outil, tel que marteau ou tournevis.

Il s'agit, en tout cas, d'un outil simple, à la disposition de tous.

Au cours de cet enfoncement, qui conduit le pied 24 du verrou 23 à s'engager dans le puits 22, il y a une déformation élastique temporaire de ce puits 22 par la surface d'engagement tronconique 27 correspondante dudit pied 24, jusqu'à ce que, les épaulements 25 de celui-ci étant venus au droit de ceux 26 correspondants du puits 22, lesdits épaulements 25, 26 viennent en prise l'un avec l'autre, tel que représenté à la figure 5.

Le verrou 23 est dès lors monté rotatif par son pied 24 dans le puits 22 de la platine 20.

Il y est donc assujetti à demeure.

L'opération d'enfoncement ainsi appliquée au verrou 23 peut être effectuée en atelier.

En variante, elle peut être effectuée sur les lieux mêmes d'utilisation de l'embase de fixation 10 suivant l'invention.

On supposera tout d'abord, ci-après, en référence aux figures 6, 7, que celle-ci doit être mise en place sur un profilé à section en forme de chapeau.

Par sa dent de retenue 38, l'embase de fixation 10 est d'abord engagée de biais sur l'un des retours en équerre 18 d'un tel profilé, figure 6A, puis, suivant la flèche F1 de la figure 6A, elle est rabattue contre l'autre retour en équerre 18 de celui-ci.

Au cours de ce rabattement, il y a un refoulement temporaire élastique de la languette élastiquement déformable 40 portant la dent de retenue 37, jusqu'à ce que, celle-ci arrivant au droit de la face inférieure du retour en équerre 18 concerné du profilé 12, elle s'engage sous ce retour en équerre 18, permettant ainsi un retour élastique à sa position initiale de la languette élastiquement déformable 40 qui la porte, figure 6B.

La mise en place de l'embase de fixation 10 suivant l'invention sur le profilé 12 se fait donc par simple encliquetage.

Au terme de celui-ci, elle est fermement assujettie à ce profilé 12.

Il résulte en outre de ce qui précède que l'axe A' du pied 24 de son verrou 23 se trouve alors confondu avec celui A de l'ouverture de ce profilé 12.

Ainsi qu'on le comprendra, s'agissant d'un profilé à section en forme de chapeau, la mise en place de l'embase de fixation 10 suivant l'invention sur un tel profilé peut indifféremment se faire dans un sens ou dans l'autre.

On supposera ci-après que la goulotte 11 à rapporter sur le profilé 12 est à disposer perpendiculairement à celui-ci.

Les bras 31 de la tête 30 du verrou 23 de l'embase de fixation 10 suivant l'invention sont alors eux-mêmes disposés perpendiculairement à ce profilé 12, figure 7A, et, par l'une de ses ouvertures 15, la goulotte 11 est engagée sur ladite tête 30.

Il suffit, dès lors, à l'aide d'un simple tournevis, de faire tourner le verrou 23 d'un quart de tour, figure 7B, pour que, les bras 31 de la tête 30 de celui-ci prenant appui sur la face interne du fond 13 de la goulotte 11, celle-ci se trouve assujettie à l'embase de fixation 10 suivant l'invention, et, par celle-ci, au profilé 12 sur lequel celle-ci est elle-même assujettie.

Ainsi qu'on le comprendra, au cours de la rotation d'un quart de tour du verrou 23, les rampes coniques 32 que présentent sur leur face supérieure les bras 31 de la tête 30 de celui-ci facilitent avantageusement l'engagement de ces bras 31 sur la face supérieure du fond 13 de la goulotte 11, par montée progressive sur celle-ci, compte tenu de la capacité de déformation élastique des portions élastiquement déformables desdits bras 31 portant lesdites rampes obliques 32.

En outre, comme mentionné ci-dessus, d'éventuelles tolérances de fabrication, et notamment d'éventuelles différences d'épaisseur pour le fond 16 de la goulotte 11, sont ainsi avantageusement absorbées.

Lorsque, tel que décrit en référence aux figures 9, 10, des fentes 34 sont prévues sur les bras 31 pour y individualiser la portion élastiquement déformable portant les rampes obliques 32, l'effort de vissage à exercer est avantageusement moindre.

Dans ce qui précède, on a supposé que le profilé 12 concerné, à section en forme de chapeau, était un profilé hors norme, 35 X 15.

Les opérations décrites sont les mêmes s'il s'agit d'un profilé normalisé (LEI) - TH 35-15.

Mais, lorsque l'embase de fixation 10 suivant l'invention est ainsi en place sur un tel profilé, sa languette élastiquement déformable 40' et sa cloison, rigide ou semi-rigide 45', se trouvent élastiquement refoulées par ce profilé, compte tenu des dimensions de celui-ci.

C'est la raison pour laquelle la rigidité de la cloison 45' n'est en réalité que relative.

Lorsque, tel qu'illustré par la figure 8, l'embase de fixation suivant l'invention doit être rapportée sur un profilé à section en forme de G, il est procédé comme précédemment, mais, d'une part, ce sont alors les dents de retenue 37', 38' de cette embase de fixation qui interviennent, et, d'autre part, il est impératif que celles-ci soient mises en place suivant un sens déterminé vis-à-vis d'un tel profilé.

Il peut si désiré être prévu un repère à cet effet sur l'embase de fixation suivant l'invention.

Ainsi qu'on l'aura compris, les nervures de raidissement 53 reliant la baguette 52 à la cloison rigide, ou semi-rigide, 45' évitent que, par une fausse manoeuvre, l'engagement de l'embase de fixation suivant l'invention sur l'aile 17 de plus faible hauteur d'un tel profilé à section en forme de G ne puisse intempestivement se faire par ladite baguette 52, au lieu de se faire par la dent de retenue 38'.

Quoi qu'il en soit, et ainsi qu'on le notera sur la figure 8, un tel engagement implique un escamotage élastique de la dent de retenue 37, alors inutilisée.

Dans tous les cas, la goulotte 11 peut aisément être retirée, par pivotement rétrograde d'un quart de tour du verrou 23, et dégagement ensuite de celui-ci.

De même, l'embase de fixation 10 suivant l'invention peut dans tous les cas être retirée du profilé 12 auquel elle est assujettie.

Il suffit, à cet effet, d'agir en conséquence sur la languette élastiquement déformable 40 ou 40', par exemple à l'aide d'un tournevis, cette action étant facilitée par le fait qu'une telle languette élastiquement déformable 40 est accessible de l'extérieur de la platine 20, soit frontalement, soit latéralement lorsqu'elle présente un prolongement 44, 44'.

Par contre, les dents de retenue 37, 38 ou 37', 38', de l'embase de fixation suivant l'invention, s'opposent avantageusement, de manière efficace, à tout arrachement intempestif de celle-ci du profilé 12 sur lequel elle est rapportée.

Lorsque, comme schématisé en traits interrompus à la figure 1, la languette élastiquement déformable 40, ou 40', portant la dent de retenue 37, ou 37', comporte un prolongement 43, ou 43', celui-ci, par appui sur le fond de l'échancrure 44, ou 44', dans laquelle il est engagé, s'oppose avantageusement à une déformation de ladite languette élastiquement déformable de nature à conduire la dent de retenue qu'elle porte à échapper au profilé 12.

On appréciera également que, dans tous les cas, compte tenu des dispositions adoptées pour les surfaces d'appui 49, 49', 50, 50', la goulotte 11 se trouve toujours implantée à une même distance $\underline{h}$ du profilé 12 auquel elle est assujettie par l'embase de fixation 10 suivant l'invention, quel que soit le type de ce profilé.

Autrement dit, et comme déjà souligné ci-dessus, l'embase de fixation suivant l'invention est avantageusement à même d'assurer à une goulotte 11 un plan de fixation bien déterminé, toujours le même, quel que soit le type de profilé 12 sur lequel elle est rapportée.

Au lieu d'être implantée perpendiculairement à un tel profilé 12, elle peut, bien entendu, être implantée parallèlement à celui-ci.

Son axe alors se trouve avantageusement confondu avec celui de l'ouverture de ce profilé 12.

Dans tous les cas, compte tenu des dispositions adoptées pour l'implantation des dents de retenue 37, 37', 38, 38' par rapport à l'axe A' du pied 24 du verrou 23, suivant lesquelles lesdites dents de retenue sont établies à égale distance de cet axe A', celui-ci est toujours avantageusement confondu avec l'axe A du profilé 12 concerné, quel que soit le type de celui-ci.

Autrement dit, et comme déjà souligné ci-dessus, l'embase de fixation suivant l'invention est avantageusement à même d'assurer à une goulotte 11 un axe de fixation bien déterminé, toujours le même, par rapport au profilé sur lequel elle est rapportée, quel que soit le type de ce profilé.

Ainsi qu'on l'aura noté, lorsqu'elle est prête à être mise en oeuvre, l'embase de fixation 10 suivant l'invention comporte une partie mobile par rapport à sa platine 20; il s'agit du verrou constituant l'organe de fixation 23 dont elle est préférentiellement équipée, ce verrou étant alors monté rotatif par rapport à sa dite platine 20.

Autrement dit, l'assujettissement d'une goulotte 11 à un profilé 12 se fait, suivant l'invention, à l'aide d'une embase 10 dont seule une portion, en l'espèce ledit verrou, est mobile, et, en pratique, rotatif.

Il en résulte, notamment, que les frottements à vaincre lors d'un tel assujettissement sont avantageusement relativement faibles, puisque qu'ils se bornent à ceux se développant alors entre le verrou en question, d'emprise réduite, et le fond de la goulotte concernée, la platine 20 associée, qui est elle aussi au contact dudit fond, restant, quant à elle, avantageusement fixe par rapport à celui-ci; ainsi se trouvent conjugués, de manière au moins apparamment parodoxale, une mise en oeuvre relativement aisée et un assujettissement final particulièrement ferme et sûr.

Il en résulte, également, cet assujettissement se faisant en deux temps, à savoir un premier impliquant le seul encliquetage, très aisé, de l'embase de fixation 10 sur le profilé 12, et un deuxième impliquant le seul verrouillage, également très aisé, de la goulotte 11 sur cette embase de fixation 10, qu'il n'est avantageusement pas nécessaire, pour ce faire, d'intervenir simultanément sur la goulotte 11, le profilé 12 et l'embase de fixation 10.

L'opération correspondante s'en trouve avantageusement facilitée.

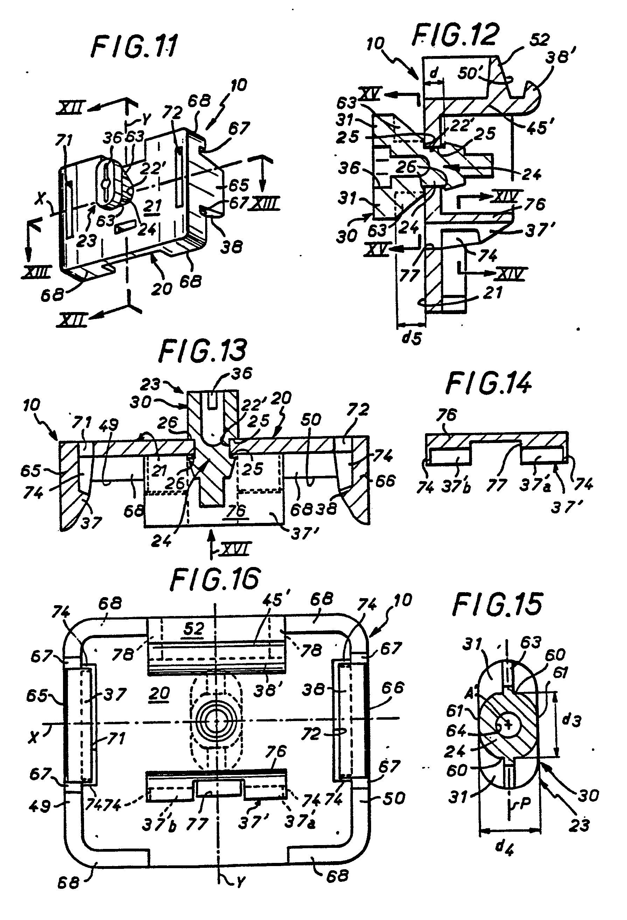

Dans la forme de réalisation représentée sur les figures 11 à 16, l'embase de fixation 10 suivant l'invention comporte, comme précédemment, une platine 20, de contour globalement rectangulaire à angles arrondis, qui, par sa face supérieure 21, forme un plan de repos sur lequel peut venir porter par son fond une goulotte, et qui, dans la zone médiane de cette face supérieure 21, présente des moyens propres à l'intervention d'un organe de fixation qui, destiné à traverser le fond de ladite goulotte à la faveur d'une ouverture de celui-ci, est apte à agripper ledit fond.

Comme précédemment, lesdits moyens sont constitués par un puits; dans la forme de réalisation représentée, ce puits se réduit à une simple ouverture de contour circulaire 22' de la platine 20, mais, comme précédemment, il pourrait s'agir aussi bien d'un réel puits, à margelle en saillie sur la face supérieure 21 de cette platine 20.

Comme précédemment, l'organe de fixation 23 associé est un verrou à tourner d'un quart de tour, dont le pied, ou fût, 24 est adapté à être monté rotatif dans l'ouverture 22' de la platine 20, et présente, transversalement, à cet effet, à une distance d l'un de l'autre, deux épaulements 25, qui sont tournés l'un vers l'autre, et par lesquels il est apte à enserrer à rotation ladite platine 20, tandis que sa tête 30 forme transversalement deux bras 31 disposés dans le prolongement l'un de l'autre.

Ainsi, dans la forme de réalisation représentée, la distance d entre les épaulements 25 du pied 24 du verrou formant l'organe de fixation 23 n'est que sensiblement égale, au jeu près, à l'épaisseur de la platine 20, tout en étant légèrement supérieure à celle-ci, cette platine 20 formant directement, par sa face inférieure et par sa face supérieure, les épaulements 26 destinés à coopérer en retenue avec lesdits épaulements 25.

Au-dessus de la platine 20, le pied 24 du verrou formant l'organe de fixation 23 présente, au moins localement, en section transversale, figure 15, deux méplats 60 disposés globalement en positions diamétralement opposées l'un par rapport à l'autre, sensiblement perpendiculairement au plan diamétral moyen P des bras 31 que forme la tête 30 de ce verrou, c'est-à-dire au plan qui, passant par l'axe A' de celui-ci, passe également par la direction d'allongement desdits bras par rapport audit axe A'.

Sur la figure 15, le plan diamétral p et l'axe A' ont été schématisés en traits interrompus par leurs traces.

En pratique, la distance $d_3$ entre les méplats 60 est choisie pour être sensiblement égale à la largeur des ouvertures que présente usuellement le fond d'une goulotte.

En pratique également, dans la forme de réalisation représentée, le pied 24 du verrou constituant l'organe de fixation 23 présente, au moins localement, en section transversale, deux autres méplats 61, qui, disposés globalement en positions diamétralement opposées l'un par rapport à l'autre, alternent en croix avec les méplats 60 précédents, et sont donc sensiblement parallèles au plan diamétral P défini ci-dessus.

La distance $d_4$ entre ces méplats 61 est faite légèrement inférieure à la distance $d_3$ précédente.

Ainsi donc, dans la forme de réalisation représentée, la section transversale du pied 24 du verrou constituant l'organe de fixation 23 est globalement ovale.

Comme précédemment, il en est de même pour la section transversale de la tête 30 de ce verrou, cette section transversale, qui est tangente à celle du pied 24 suivant les méplats 61 de celui-ci, étant sensiblement complémentaire de celle de l'ouverture que présente usuellement le fond d'une goulotte.

Dans la forme de réalisation représentée, sur la face inférieure de chacun des bras 31 du verrou constituant l'organe de fixation 23, s'étend un voile de faible épaisseur 63, qui le relie au pied 23, associé, et qui est déformable.

En pratique, un tel voile 63 s'étend sensiblement en triangle, suivant le plan diamétral moyen P du bras 31 auquel il est associé, et il se raccorde au pied 24 dans la zone médiane du méplat 60 correspondant de celui-ci.

Quoi qu'il en soit les voiles 63 que présente ainsi le verrou constituant l'organe de fixation 23 suffisent, de manière très simple, à l'adaptation, qui est souhaitable, de l'embase de fixation 10 concernée à des goulottes d'épaisseurs de fond différentes, en absorbant, par leur capacité de déformation, les differentes épaisseurs correspondantes, dans les limites bien entendu pour une telle goulotte, d'une épaisseur de fond comprise entre la distance $d_5$ séparant de la face supérieure 21 de la platine 20 la face inférieure des bras 31 de la tête 30 dudit verrou.

Cette tête 30 peut dès lors demeurer compacte, sans présenter une quelconque saignée de nature à en rendre une partie élastiquement déformable pour une telle adaptation.

Au contraire, ainsi compacte, cette tête 30 présente avantageusement une grande rigidité, garante d'une bonne tenue pour la goulotte concernée, même lorsqu'il s'agit d'une goulotte de relativement grande capacité et/ou qu'une telle goulotte porte une charge relativement importante.

Comme précédemment, la tête 30 du verrou constituant l'organe de fixation 23 présente, diamétralement, en surface, pour sa commande en rotation, une saignée 36.

Mais, dans la forme de réalisation représentée, et pour parfaire encore la rigidité de la dite tête 30, il s'agit d'une saignée borgne, c'est-à-dire d'une saignée dont, longitudinalement, les extrémités ne débouchent pas à l'exterieur.

En pratique, dans la forme de réalisation représentée, cette saignée 36 s'étend suivant le plan diamétral moyen P, en s'arrêtant à distance des extrémités des bras 31, ou, autrement dit, de la tranche de la tête 30 qu'elle affecte.

En outre, dans cette forme de réalisation, et pour des questions de moulage, cette saignée 36 se trouve être recoupée, dans sa zone médiane, par un évidement globalement cylindrique 64 prévu dans l'axe de l'ensemble pour en minimiser l'épaisseur dans cette zone et ainsi éviter des retassures au refroidissement après moulage.

Compte tenu de ce qui précède, et malgré la saignée 36, la tête 30 du verrou constituant l'organe de fixation 23 est donc particulièrement massive.

Bien entendu, si, sur les figures, le verrou constituant l'organe de fixation 23 a été représenté enfoncé, la partie de son pied 24 compris entre ses épaulements 25 étant en prise avec l'ouverture 22' de la platine 20, il peut aussi bien, comme décrit précédemment, venir d'un seul tenant de moulage avec cette platine 20, en étant rattachée a celle-ci que par des moyens de liaison, ponctuels ou continus, defonçables, a rompre pour son enfoncement.

Comme décrit précédemment, l'embase de fixation 10 représentée sur les figures 11 à 16 comporte en outre au moins deux dents de retenue 37, 38, qui, disposées sur la face inférieure de la platine 20, sont aptes à coopérer avec les retours en équerre d'un même profilé, en l'espèce un profilé à section en forme de chapeau, et dont une au moins est portée par une languette élastiquement déformable.

En pratique, dans la forme de réalisation représentée, chacune de ces dents de retenue 37, 38 est portée par une languette élastiquement déformable 65, 66.

En pratique, également, les languettes élastiquement déformables 65, 66 correspondantes sont établies le long de deux bords opposés de la platine 20, en étant séparées par des encoches 67 d'un rebord 68 que présente celle-ci dans ses angles pour, d'une part, en affermir le raidissement, et, d'autre part, former, par la tranche de ces rebords 68, les surfaces d'appui coplanaires 49, 50 associées aux dents de retenue 37, 38.

Il résulte de ce qui précède que, globalement, les dents de retenue 37, 38, qui sont tournées l'une vers l'autre, s'etendent chacune respectivement de part et d'autre de l'organe de fixation 23, sensiblement symétriquement par rapport à l'axe A' du pied 24 du verrou formant cet organe de fixation 23, et transversalement par rapport à une première direction X de la platine 20.

Cette direction X a été schématisée en traits interrompus sur les figures 11 et 16.

Comme précédemment, chacune des languettes élastiquement déformables 65, 66 est accessible de l'extérieur de la platine 20.

Le long de ses deux bords opposés correspondants, cette platine 20 présente à cet effet, au droit, chacun respectivement, des dents de retenue 37, 38, deux évidements 71, 72 allongés en boutonnière à contour rectangulaire.

Dans la forme de réalisation représentée, l'une au moins des dents de retenue 37, 38 se trouve localement recoupée, transversalement, par au moins un voile 74, de faible épaisseur, et, en pratique, d'épaisseur inférieure à celle des voiles 63 du verrou constituant l'organe de fixation 23.

Dans la forme de réalisation représentée, un tel voile 74, qui vient directement de moulage, est ainsi prévu à chacune des extrémités de chacune des dents de retenue 37, 38, en s'étendant en continu entre celle-ci et la face inférieure de la platine 20.

En pratique, les voiles 74 ainsi associés aux dents de retenue 37, 38 s'apparentent aux "flashes", ou bavures, résultant, en moulage, d'un intempestif manque d'étanchéité du moule mis en oeuvre.

Mais ils sont ici systématiquement recherchés, de manière contrôlée, pour former un frein au contact du profilé sur lequel l'embase de fixation suivant l'invention est engagée.

La tenue de cette embase de fixation sur ce profilé s'en trouve renforcée, toute possibilité de glissement libre le long de celui-ci se trouvant évitée par l'effet de freinage obtenu, tout en laissant bien entendu possible un glissement forcé si désiré.

Comme précédemment, deux paires de dents de retenue sont en pratique prévues, pour deux types de profilés différents.

Ainsi, à la première paire de dents de retenue 37, 38 précédente, il est associé, comme précédemment, une deuxième paire de dents de retenue 37', 38' adaptées à un profilé à section en forme de G.

Mais, dans la forme de réalisation représentée, les deux paires de dents de retenue 37, 38, 37', 38, ainsi mises en oeuvre sont établies suivant des directions différentes de la platine.

En pratique, dans cette forme de réalisation, elles sont établies en croix, les deux dents de retenue 37', 38', qui, comme les dents de retenue 37, 38, s'étendent chacune respectivement de part et d'autre de l'organe de fixation 23, sensiblement symétriquement par rapport à l'axe A' du pied 24 du verrou constituant cet organe de fixation 23, s'étendent transversalement par rapport à une deuxième direction Y de la platine 20 sensiblement perpendiculaire à la première direction X mentionnée ci-dessus de celle-ci.

Comme la direction X, la direction Y a été schématisée en traits interrompus sur les figures 11 et 16.

Il résulte de ce qui précède que les dents de retenue 37', 38' s'étendent parallèlement à deux bords opposés de la platine 20, en étant en pratique disposées en retrait par rapport à ceux-ci.

Il s'agit, dans la forme de réalisation représentée, des bords de plus grande longueur de cette platine 20, les dents de retenue 37, 38 étant disposées le long des bords de plus petite longueur de celle-ci.

Comme les dents de retenue 37, 38, la dent de retenue 37', qui est à niveau avec celles-ci, est portée par une languette élastiquement déformable 76 accessible de l'extérieur à la faveur d'un évidement 77, allongé en boutonnière à contour rectangulaire, prévu à cet effet dans la platine 20.

En pratique, cet évidement 77 se prolonge sur toute la hauteur de la languette élastiquement déformable 76, et il partage donc en deux tronçons 37'a, 37'b la dent de retenue 37, portée par celle-ci.

Commme précédemment, cette dent de retenue 37' est localement recoupée, transversalement, par au moins un voile 74 de faible épaisseur, et, ainsi, déformable.

En pratique, un tel voile 74 est prévu à chacune des extrémités de la dent de retenue 37', et, d'un seul tenant avec celle-ci, il la raccorde à la face inférieure de la platine 20.

Conjointement, la dent de retenue 38' est portée par une cloison rigide, ou semi-rigide, 45', qui, d'un seul tenant avec la platine 20, sur la face inférieure de celle-ci, est établie en retrait par rapport au bord correspondant de cette platine 20.

Deux nervures 78 prévues latéralement le long de cette cloison 45' en continuité avec les rebords 27 correspondants de la platine 20 relient en continu cette platine 20, ces rebords 68 et cette cloison 45', à une baguette 52 que présente en saillie ladite cloison 45', parallèlement à la dent de retenue 38', à distance de celle-ci, pour former la surface d'appui 50' associée à cette dent de retenue 38'.

En pratique, cette baguette 52 s'étend jusqu'au droit du bord correspondant de la platine 20 et la surface d'appui 50' qu'elle forme se prolonge en oblique jusqu'à sa tranche, au-delà de la dent de retenue 38', pour faciliter l'engagement de l'ensemble sur le profilé à section en forme de G concerné.

La mise en oeuvre de l'embase de fixation 10 ainsi constituée est en tout point semblable à celle décrite précédemment.

Compte tenu, cependant, des méplats 60 prévus sur le pied 24 du verrou constituant son organe de fixation 23, et de la valeur relative de la distance $d_3$ entre ces méplats 60 vis-à-vis de la largeur des ouvertures qui, présentes sur le fond d'une goulotte, sont mises à profit pour l'engagement de celle-ci sur la tête dudit verrou, celui-ci se trouve avantageusement bloqué en rotation sur une telle goulotte après sa rotation d'un quart de tour consécutif à un tel engagement, les dits méplats 60 venant alors porter contre la tranche de l'ouverture qu'il traverse, après avoir marqué d'un "dur", à surmonter, sa rotation.

En outre, vis-à-vis de la disposition alignée suivant une même direction appliquée, dans la forme de réalisation plus particulièrement décrite en référence aux figures 1 à 10, aux deux paires de dents de retenue mises en oeuvre, la disposition en croix appliquée à celles-ci dans la présente forme de réalisation conduit avantageusement à une grande compacité pour l'embase de fixation concernée.

Il en résulte, aussi bien un gain de matière non négligeable, de l'ordre de 20 à 30%, qu'une facilité de moulage supérieure, le moule nécessaire à ce sujet se trouvant simplifié et ne devant notamment comporter qu'un nombre plus réduit de tiroirs ou noyaux.

Il en résulte donc, globalement, une diminution des coûts de fabrication.

Il en résulte en outre avantageusement une élimination de tout risque d'interférence entre tel ou tel profilé et celles des dents de retenue qui demeurent inutilisées lors d'une mise en place sur celui-ci.

Bien entendu, la présente invention ne se limite pas aux formes de réalisation et de mise en oeuvre décrites et représentées, mais englobe toute variante d'exécution et/ou de combinaison de leurs divers éléments.

En particulier, au lieux d'être disposées d'un même côté du verrou, les cloisons rigides ou semi-rigides, correspondant à deux types de profilés distincts, peuvent être disposées de part et l'autre de celui-ci, et il en va alors bien entendu de même pour les languettes élastiquement déformables correspondantes.

Dans tous les cas, le puits que présente pour ce verrou la platine de l'embase de fixation suivant l'invention est avantageusement distinct de ses dents de retenue, lesdites dents de retenue étant toujours établies à distance dudit puits, de part et d'autre de celui-ci, ce qui leur permet d'être opératives même si le verrou y est en place, et ce qui permet en outre à certaines au moins d'entre elles de s'étendre effectivement, si désiré, le long des bords de ladite platine, comme décrit pour deux de ces dents de retenue en référence à la forme de réalisation des figures 11 à 16.

## Revendications

1. Embase de fixation propre à l'assujettissement d'une goulotte sur un profilé à ailes munies de retours en équerre, du genre comportant une platine (20), qui, par sa face supérieure, forme un plan de repos sur lequel peut venir porter par son fond (13) une goulotte (11), et qui, dans la zone médiane de ladite face supérieure, présente des moyens propres à l'intervention d'un organe de fixation (23), qui, destiné à traverser le fond (13) de ladite goulotte (11) à la faveur d'une ouverture (15) de celui-ci, forme un verrou à tourner d'un quart de tour et présente transversalement deux bras disposés transversalement dans le prolongement l'un de l'autre par lesquels il est apte à agripper ledit fond (13), et au moins deux dents de retenue (37-38, 37'-38'), qui, disposées sur la face inférieure de ladite platine (20), sont aptes à coopérer avec les retours en équerre d'un même profilé, caractérisée en ce que l'une au moins desdites dents de retenue (37-38, 37'-38') est portée par une languette élastiquement déformable (40, 40', 65, 66, 76), les moyens que présente la platine (20) pour l'intervention d'un organe de fixation (23) sont constitués par un puits (22, 22') établi sensiblement perpendiculairement à la face supérieure de ladite platine (20), et, par son pied (24), le verrou que forme ledit organe de fixation (23) est adapté à être rotatif dans ledit puits (22, 22'), ledit verrou étant la seule portion de l'ensemble à être ainsi destinée à être rotative.

2. Embase de fixation suivant la revendication 1, caractérisée en ce que le verrou constituant l'organe de fixation (23) est assujetti à demeure à la platine, dans l'axe du puits (22, 22') que présente cette platine (20).

3. Embase de fixation suivant la revendication 2, caractérisée en ce que ledit verrou est par avance monté rotatif dans le puits (22, 22') de la platine (20).

4. Embase de fixation suivant la revendication 2, caractérisée en ce que ledit verrou est d'un seul tenant avec la platine (20), à distance de celle-ci, en n'étant rattaché à cette platine (20) que par des moyens de liaison (29) ponctuels ou continus, défonçables.

5. Embase de fixation suivant l'une quelconque des revendications 1 à 4, caractérisée en ce que le pied (24) du verrou constituant l'organe de fixation (23) présente transversalement deux épaulements tournés l'un vers l'autre (25), pour enserrer à rotation deux épaulements (26) prévus de manière semblable à cet effet sur le puits (22) de la platine (20).

6. Embase de fixation suivant la revendication 5, caractérisée en ce que celui des épaulements (25) du pied (24) dudit verrou qui est le plus proche de l'extrémité libre de celui-ci est précédé, du côté de ladite extrémité libre, d'une surface tronconique d'engagement (27).

7. Embase de fixation suivant l'une quelconque des revendications 1 à 6, caractérisée en ce que le puits (22, 22') que présente la platine (20) pour le verrou constituant l'organe de fixation (23) est distinct des dents de retenue (37-38, 37'-38'), lesdites dents de retenue (37-38, 37'-38') étant établies à distance dudit puits, de part et d'autre de celui-ci.

8. Embase de fixation suivant la revendication 7, caractérisée en ce que, alors que ledit puits est disposé dans la zone médiane de la platine (20), certaines au moins des dents de retenue (37, 38) s'étendent le long des bords de ladite platine (20).

9. Embase de fixation suivant l'une quelconque des revendications 1 à 8, caractérisée en ce que le puits que présente la platine (20) pour le verrou constituant l'organe de fixation (23) se réduit à une simple ouverture de contour circulaire (22') de ladite platine (20).

10. Embase de fixation suivant la revendication 1, caractérisée en ce que, sur sa face inférieure, chacun des bras (31) du verrou constituant l'organe de fixation (23) présente une rampe (32) globalement oblique vis-à-vis de l'axe (A') du pied (24) dudit verrou (23).

11. Embase de fixation suivant la revendication 10, caractérisée en ce que la rampe oblique (32) que présente un bras (31) du verrou est formée sur une portion élastiquement déformable dudit bras.

12. Embase de fixation suivant la revendication 11, caractérisée en ce que ladite portion est séparée par une fente (34) de la partie courante du bras (31) auquel elle appartient.

13. Embase de fixation suivant la revendication 12, caractérisée en ce que ladite fente (34) s'étend parallèlement à l'axe (A') du pied (24) dudit verrou, transversalement par rapport au bras (31) qu'elle affecte.

14. Embase de fixation suivant la revendication 12, caractérisée en ce que ladite fente (34) s'étend perpendiculairement à l'axe (A') du pied (24) dudit verrou, dans l'épaisseur du bras (31) qu'elle affecte.

15. Embase de fixation suivant la revendication 1, caractérisée en ce que, sur la face inférieure de chacun des bras (31) du verrou constituant l'organe de fixation (23) s'étend un voile de faible épaisseur (63), qui le relie au pied (24) associé, et qui est déformable.

16. Embase de fixation suivant la revendication 15, caractérisée en ce que ledit voile (63) s'étend sensiblement en triangle, suivant le plan diamétral moyen du bras (31) auquel il est associé.

17. Embase de fixation suivant l'une quelconque des revendications 1 à 16, caractérisée en ce que la tête (30) du verrou constituant l'organe de fixation (23) présente diamétralement une saignée (36) pour sa commande en rotation.

18. Embase de fixation suivant la revendication 17, caractérisée en ce que ladite saignée (36) est une saignée borgne, c'est-à-dire une saignée dont les extrémités ne débouchent pas longitudinalement à l'extérieur.

19. Embase de fixation suivant l'une quelconque des revendications 1 à 18, caractérisée en ce que, au-dessus de la platine (20), le pied (24) du verrou constituant l'organe de fixation (23) présente au moins localement, en section transversale, deux méplats (60) disposés globalement en positions diamétralement opposées l'un par rapport à l'autre, sensiblement perpendiculairement au plan diamétral moyen desdits bras (31).

20. Embase de fixation suivant l'une quelconque des revendications 1 à 19, caractérisée en ce que la languette élastiquement déformable (40, 40') portant l'une des dents de retenue s'étend transversalement par rapport à la platine (20), en porte-à-faux à compter d'une zone d'enracinement à celle-ci (41, 41') formant globalement pour elle une articulation d'axe parallèle à celui (A') de l'organe de fixation (23).

21. Embase de fixation suivant l'une quelconque des revendications 1 à 20, caractérisée en ce que la languette élastiquement déformable (40, 40') portant l'une des deux dents de retenue prévues pour un même profilé est accessible de l'extérieur de la platine (20).

22. Embase de fixation suivant la revendication 21, caractérisée en ce que ladite languette élastiquement déformable (40, 40') affleure à la face supérieure de la platine (20), et s'étend à la faveur d'un évidement (42, 42') de celle-ci.

23. Embase de fixation suivant l'une quelconque des revendications 21, 22, caractérisée en ce que, à son extrémité libre, la languette élastiquement déformable (40, 40') comporte un prolongement (43, 43') qui s'étend jusqu'au bord de la platine (20) à la faveur d'une échancrure (44, 44') de celui-ci.

24. Embase de fixation suivant l'une quelconque des revendications 1 à 23, caractérisée en ce que l'une au moins des dents de retenue (37-38, 37'-38'), se trouve localement recoupée, transversalement, par au moins un voile de faible épaisseur (74), qui est déformable, et qui est ainsi apte à former un frein au contact du profilé correspondant.

25. Embase de fixation suivant la revendication 24, caractérisée en ce qu'un voile (74) est ainsi établi à l'une au moins des extrémités de la dent de retenue (37-38, 37'-38'), à laquelle il est associé.

26. Embase de fixation suivant l'une quelconque des revendications 1 à 25, caractérisée en ce que l'autre des deux dents de retenue prévues pour un même profilé est portée par une cloison rigide, ou semi-rigide, (45, 45') de la platine (20).

27 Embase de fixation suivant l'une quelconque des revendications 1 à 26, caractérisée en ce que deux paires de dents de retenue (37-38, 37'-38') sont prévues, pour deux types de profilé différents.

28. Embase de fixation suivant la revendication 27, caractérisée en ce que les dents de retenue (37, 37') desdites paires, qui, chacune respectivement, sont portées par une languette élastiquement déformable (40, 40'), sont disposées d'un même côté de l'organe de fixation (23).

29. Embase de fixation suivant la revendication 27, caractérisée en ce que lesdites paires de dents de retenue sont établies suivant des directions différentes (X, Y) de la platine (20).

30. Embase de fixation suivant la revendication 29, caractérisée en ce que lesdites paires de dents de retenue (37-38, 37'-38') sont établies en croix, les deux dents de retenue (37, 38) d'une première paire s'étendant transversalement par rapport à une première direction (X) de a platine (20), tandis que les deux dents de retenue (37', 38') de la deuxième paire s'étendent transversalement par rapport à une deuxième direction (Y) de ladite platine (20) sensiblement perpendiculaire à la première.

31. Embase de fixation suivant l'une quelconque des revendications 27 à 30, caractérisée en ce que, pour l'une au moins des paires de dents de retenue (37-38, 37'-38'), chacune des dents de retenue est portée par une languette élastiquement déformable (65, 66).

32. Embase de fixation suivant l'une quelconque des revendications 1 à 31, caractérisée en ce que les deux dents de retenue (37-38, 37'-38') prévues pour un même profilé s'étendent chacune respectivement de part et d'autre du verrou constituant l'organe de fixation (23), transversalement par rapport à la platine (20).

33. Embase de fixation suivant la revendication 32, caractérisée en ce que les dents de retenue (37-38, 37'-38') prévues pour un même profilé sont établies à égale distance de l'axe dudit verrou, en sorte qu'un même axe de fixation est assuré à la goulotte (11), quel que soit le type dudit profilé.

34. Embase de fixation suivant la revendication 33, caractérisée en ce que des surfaces d'appui (49-50, 49'-50') sont associées aux dents de retenue (37-38, 37'-38'), parallèlement à la face supérieure de la platine (20), les surfaces d'appui (49, 50) correspondant à un premier type de profilé sont coplanaires, et l'une des surfaces d'appui (49', 50') correspondant à un deuxième type de profilé est établie à une même distance de ladite face supérieure de la platine (20) que les précédentes, en sorte qu'un même plan de fixation est assuré à la goulotte (11), quel que soit le type de profilé.

**Patentansprüche**

1. Befestigungssockel zur Befestigung eines Rinnenprofils an einem Profil mit Flügeln, die mit Winkelumfalzungen versehen sind, der Bauart mit einer Platine (20), die vermittels ihrer Oberseite eine Ruheebene bildet, auf der vermittels ihres Bodens (13) ein Rinnenprofil (11) ruhen kann und welche in der Mittelzone dieser Oberseite Einrichtungen aufweist, die in Wechselwirkung mit einem Befestigungsorgan (23) treten können, welches, dazu bestimmt, den Boden (13) dieser Rinne (11) aufgrund einer Öffnung (15) hiervon zu durchsetzen, eine Schraube mit Vierteldrehung bildet und in Querrichtung zwei Arme formt, die quer in der Verlängerung zueinander angeordnet sind, über welche sie in die Lage versetzt ist, diesen Boden (13) zu erfassen und mit wenigstens zwei Haltezähnen (37-38, 37'-38'), die auf der Unterseite dieser Platine (20) angeordnet, in die Lage versetzt sind, mit diesen Winkelrückfalzungen ein und des gleichen Profils zusammenzuwirken, dadurch gekennzeichnet, daß wenigstens einer der Haltezähne (37-38; 37'-38') von einer elastisch verformbaren Zunge (40, 40', 65, 66, 76) getragen ist, wobei die Einrichtungen, welche die Platine (20) zur Wechselwirkung mit einem Befestigungsorgan (23) trägt, gebildet sind durch einen Schacht (22, 22'), der im wesentlichen senkrecht zur Oberseite dieser Platine (20) ausgebildet ist und daß mit ihrem Fuß (24) die von diesem Befestigungsorgan (23) gebildete Schraube in die Lage versetzt ist, in diesen Schacht (22, 22') drehbar zu sein, wobei die Schraube der einzige Teil der Anordnung ist, der dazu bestimmt ist, drehbar zu sein.

2. Befestigungssockel nach Anspruch 1, dadurch gekennzeichnet, daß die das Befestigungsorgan (23) bildende Schraube dauernd an der Platine in der Achse des Schachts (22, 22'), welchen diese Platine (20) bildet, befestigt ist.

3. Befestigungssockel nach Anspruch 2, dadurch gekennzeichnet, daß diese Schraube drehbar im Schacht (22, 22') der Platine (20) vormontiert ist.

4. Befestigungssockel nach Anspruch 2, dadurch gekennzeichnet, daß diese Schraube zusammenhängend mit der Platine (20) unter Abstand von dieser gebildet ist und an dieser Platine (20) nur durch punktuelle oder kontinuierliche ausfahrbare Verbindungsmittel (29) befestigt ist.

5. Befestigungssockel nach einem der Ansprüche 1 bis 4, dadurch gekennzeichnet, daß der Fuß (24), der das Befestigungsorgan (23) bildenden Schraube quer zwei gegeneinander (25) gewendete Schultern aufweist, um unter Drehung zwei Schultern (26) einzuspannen, die in ähnlicher Weise hierzu auf dem Schacht (22) der Platine (20) angeordnet sind.

6. Befestigungssockel nach Anspruch 5, dadurch gekennzeichnet, daß diejenige der Schultern (25) des Fußes (24) dieser Schraube, die dem freien Ende hiervon am nächsten kommt, auf der Seite dieses freien Endes mit einer vorgelagerten kegelstumpfförmigen Eingriffsfläche (27) versehen ist.

7. Befestigungselement nach einem der Ansprüche 1 bis 6, dadurch gekennzeichnet, daß der Schacht (22, 22'), den die Platine (20) für die das Befestigungsorgan (23) bildende Schraube aufweist, sich von den Haltezähnen (37-38, 37'-38') unterscheidet, wobei diese Haltezähne (37-38') unter Abstand von diesem Schacht zu beiden Seiten hiervon ausgebildet sind.

8. Befestigungssockel nach Anspruch 7, dadurch gekennzeichnet, daß, während dieser Schacht in der Mittelzone der Platine (20) angeordnet ist, wenigstens gewisse der Haltezähne (37, 38) sich längs der Ränder dieser Platine (20) erstrecken.

9. Befestigungssockel nach einem der Ansprüche 1 bis 8, dadurch gekennzeichnet, daß der Schacht, den die Platine (20) für die das Befestigungsorgan (23) bildende Schraube bildet, sich auf eine einfache Öffnung kreisförmiger Kontur (22') dieser Platine (20) reduziert.

10. Befestigungssockel nach Anspruch 1, dadurch gekennzeichnet, daß auf ihrer Unterseite jeder der Arme (31) der das Befestigungselement (23) bildenden Schraube eine Rampe (32) aufweist, die im wesentlichen schräg zur Achse (A') des Fußes (24) dieser Schraube (23) ist.

11. Befestigungssockel nach Anspruch 10, dadurch gekennzeichnet, daß die Schrägrampe (32), die ein Arm (31) der Schraube bildet, auf einem elastisch verformbaren Teil dieses Armes gebildet ist.

12. Befestigungssockel nach Anspruch 11, dadurch gekennzeichnet, daß dieser Teil durch einen Schlitz (34) vom laufenden Teil (31) des Arms, zu dem er gehört, getrennt ist.

13. Befestigungssockel nach Anspruch 12, dadurch gekennzeichnet, daß dieser Schlitz (34) sich parallel zur Achse (A') des Fußes (24) dieser Schraube quer, bezogen auf den Arm (31), den sie beeinflußt, erstreckt.

14. Befestigungssockel nach Anspruch 12, dadurch gekennzeichnet, daß dieser Schlitz (34) sich senkrecht zur Achse (A') des Fußes (24) dieser Schraube in der Dicke des Arms (31), den sie beeinflußt, erstreckt.

15. Befestigungssockel nach Anspruch 1, dadurch gekennzeichnet, daß auf der Unterseite jedes der Arme (31) der das Befestigungsorgan (23) bildenden Schraube sich eine Abdeckung geringer Dicke (63) erstreckt, die ihn mit dem zugeordneten Fuß (24) verbindet und die verformbar ist.

16. Befestigungssockel nach Anspruch 15, dadurch gekennzeichnet, daß diese Abdeckung sich im wesentlichen dreieckförmig längs der mittleren Diametralebene des Armes (31), dem sie zugeordnet ist, erstreckt.

17. Befestigungssockel nach einem der Ansprüche 1 bis 16, dadurch gekennzeichnet, daß der Kopf (30) der das Befestigungsorgan (23) bildenden Schraube diametral einen Einschnitt (36) für seine Drehsteuerung aufweist.

18. Befestigungssockel nach Anspruch 17, dadurch gekennzeichnet, daß dieser Einschnitt (36) ein Sackeinschnitt ist, d.h. ein Einschnitt, dessen Enden in Längsrichtung nicht nach außen münden.

19. Befestigungssockel nach einem der Ansprüche 1 bis 18, dadurch gekennzeichnet, daß oberhalb der Platine (20) der Fuß (24) der das Befestigungsorgan (23) bildenden Schraube wenigstens örtlich im Querschnitt zwei Abflachungen (60) aufweist, die global in diametral sich gegenüberliegenden Stellungen bezüglich einander im wesentlichen senkrecht zur mittleren Diametralebene dieser Arme (31) angeordnet sind.

20. Befestigungssockel nach einem der Ansprüche 1 bis 19, dadurch gekennzeichnet, daß die elastisch verformbare Zunge (40, 40'), die einen der Haltezähne trägt, sich quer bezogen auf die Platine (20) vorkragend von einer Wurzelzone für diese (41, 41') erstreckt und für diese im wesentlichen eine Gelenklagerung von einer Achse bildet, die parallel zu der (A') des Befestigungsorgans (23) ist.

21. Befestigungssockel nach einem der Ansprüche 1 bis 20, dadurch gekennzeichnet, daß die elastische verformbare einen der beiden für ein und das gleiche Profil vorgesehenen Haltezähne tragende Zunge von der Außenseite der Platine (20) zugänglich ist.

22. Befestigungssockel nach Anspruch 21, dadurch gekennzeichnet, daß diese elastisch verformbare Zunge (40, 40') bündig in die Oberseite der Platine (20) eingelassen ist und sich für eine Ausnehmung (42, 42') hiervon erstreckt.

23. Befestigungssockel nach einem der Ansprüche 21, 22, dadurch gekennzeichnet, daß an ihrem freien Ende die elastisch verformbare Zunge (40, 40') eine Verlängerung (43, 43') umfaßt, die sich bis zum Rand der Platine (20) für eine Ausnehmung (44, 44') hiervon erstreckt.

24. Befestigungssockel nach einem der Anpsrüche 1 bis 23, dadurch gekennzeichnet, daß wenigstens einer der Haltezähne (37-38, 37'-38') örtlich quer durch wenigstens eine Abdeckung geringer Dicke (74) hinterschnitten ist, die verformbar ist und die so in die Lage versetzt wird, eine Bremse in Kontakt mit dem entsprechenden Profil zu bilden.

25. Befestigungssockel nach Anspruch 24, dadurch gekennzeichnet, daß eine Abdeckung (74) so an wenigstens einem der Enden des Haltezahns (37-38, 37'-38'), der sie zugeordnet ist, ausgebildet ist.

26. Befestigungssockel nach einem der Ansprüche 1 bis 25, dadurch gekennzeichnet, daß der andere der beiden für ein und das gleiche Profil vorgesehenen Haltezähne von einer steifen oder halbsteifen Trennwand (45, 45') der Platine (20) getragen ist.

27. Befestigungssockel nach einem der Ansprüche 1 bis 26, dadurch gekennzeichnet, daß zwei Paare von Haltezähnen (37-38, 37'-38') für zwei Typen unterschiedlicher Profile vorgesehen sind.

28. Befestigungssockel nach Anspruch 27, dadurch gekennzeichnet, daß die Haltezähne (37, 37') dieser Paare, die jeweils von einer elastisch verformbaren Zunge (40, 40') getragen sind, auf ein und der gleichen Seite des Befestigungsorgans (23) angeordnet sind.

29. Befestigungssockel nach Anspruch 27, dadurch gekennzeichnet, daß diese Paare von Haltezähnen entsprechend unterschiedlichen Richtungen (X, Y) der Platine (20) ausgebildet sind.

30. Befestigungssockel nach Anspruch 29, dadurch gekennzeichnet, daß diese Paare von Haltezähnen (37-38, 37'-38') kreuzförmig ausgebildet sind, wobei die beiden Haltezähne (37, 38) eines ersten Paares sich quer bezüglich einer ersten Richtung (X) der Platine (20) erstrecken, während die beiden Haltezähne (37', 38') des zweiten Paares sich quer bezüglich einer zweiten Richtung (Y) dieser Platine (20) im wesentlichen senkrecht zur ersten erstrecken.

31. Befestigungssockel nach einem der Ansprüche 27 bis 30, dadurch gekennzeichnet, daß für wenigstens einen der Haltezähne (37-38, 37'-38') jeder der Haltezähne von einer elastisch verformbaren Zunge (65, 66) getragen ist.

32. Befestigungssockel nach einem der Ansprüche 1 bis 31, dadurch gekennzeichnet, daß die beiden Haltezähne (37-38, 37'-38'), die für ein und das gleiche Profil vorgesehen sind, sich jeweils zu beiden Seiten der das Befestigungsorgan (23) bildenden Schraube quer bezüglich der Platine (20) erstrecken.

33. Befestigungssockel nach Anspruch 32, dadurch gekennzeichnet, daß die Haltezähne (37-38, 37'-38'), die fur ein und das gleiche Profil vorgesehen sind, unter gleichem Abstand zur Achse der Schraube ausgebildet sind, derart, daß ein und die gleiche Befestigungsachse, unabhängig vom Typ des Profils, für die Rinne bzw. das Rinnenprofil (11) sichergestellt ist.

34. Befestigungssockel nach Anspruch 33, dadurch gekennzeichnet, daß Stützflächen (49-50, 49'-50') den Haltezähnen (37-38, 37'-38') parallel zur Oberseite der Platine (20) zugeordnet sind, wobei die einem ersten Profiltyp entsprechenden Stützflächen (49, 50) koplanar sind und eine der Stützflächen (49', 50') entsprechend einem zweiten Profiltyp unter dem gleichen Abstand von der Oberseite der Platine (20) wie die vorhergehenden ausgebildet ist, derart, daß ein und die gleiche Befestigungsebene für die Rinne (11) unabhängig vom Profiltyp sichergestellt ist.

**Claims**

1. A fixing base for securing a channel to a shaped member having limbs provided with right-angled flange portions, of the kind comprising a plate (20) which, by means of its upper face, forms a rest plane on which a channel (11) can come to be carried by way of the bottom portion (13) thereof and which, in the middle region of said upper face, has means for the intervention of a fixing member (23) which, being intended to pass through the bottom portion (13) of said channel (11) by way of an opening (15) therein, forms a lock to be turned through a quarter of a turn and transversely has two arms disposed transversely in line with each other, by way of which it is capable of gripping said bottom portion (13), and at least two retaining teeth (37 -38, 37'-38') which, disposed on the lower face of said plate (20), are capable of co-operating with the right-angled flange portions of the same shaped member, characterised in that one at least of said retaining teeth (37-38, 37'-38') is carried by an elastically deformable tongue portion (40, 40', 65, 66, 76), the means provided on said plate (20) for the intervention of a fixing member (23) are formed by a well (22, 22') disposed substantially perpendicularly to the upper face of said plate (20) and, by means of its leg (24), the lock which is formed by said fixing member (23) is adapted to be rotatable in said well (22, 22'), said lock being the only portion of the assembly which is thus intended to be rotatable.

2. A fixing base according to claim 1 characterised in that the lock forming the fixing member (23) is permanently secured to the plate on the axis of the well (22, 22') provided in said plate (20).

3. A fixing base according to claim 2 characterised in that said lock is rotatably mounted in advance in the well (22, 22') of the plate (20).

4. A fixing base according to claim 2 characterised in that said lock is in one piece with the plate (20) at a spacing therefrom, being attached to said plate (20) only by breakable spot-like or continuous connecting means (29).

5. A fixing base according to any one of claims 1 to 4 characterised in that the leg (24) of the lock forming the fixing member (23) is transversely provided with two shoulders (25) which are directed towards each other, for rotatably enclosing two shoulders (26) similarly provided for that purpose on the well (22) of the plate (20).

6. A fixing base according to claim 5 characterised in that that one of the shoulders (25) on the leg (24) of said lock which is closest to the free end thereof is preceded, on the side of said free end, by a frustoconical engagement surface (27).

7. A fixing base according to any one of claims 1 to 6 characterised in that the well (22, 22') provided in the plate (20) for the lock forming the fixing member (23) is separate from the retaining teeth (37-38, 37'-38'), said retaining teeth (37-38, 37'-38') being disposed at a spacing from said well on respective sides thereof.

8. A fixing base according to claim 7 characterised in that, when said well is disposed in the middle region of the plate (20), some at least of the retaining teeth (37, 38) extend along the edges of said plate (20).

9. A fixing base according to any one of claims 1 to 8 characterised in that the well provided in the plate (20) for the lock forming the fixing member (23) is reduced to a simple opening of circular contour (22') in said plate (20).

10. A fixing base according to claim 1 characterised in that, on its lower face, each of the arms (31) of the lock forming the fixing member (23) has a ramp (32) which is generally inclined with respect to the axis (A') of the leg (24) of said lock (23).

11. A fixing base according to claim 10 characterised in that the inclined ramp (32) which is provided on an arm (31) of the lock is formed on an elastically deformable portion of said arm.

12. A fixing base according to claim 11 characterised in that said portion is separated by a slot (34) from the body portion of the arm (31) to which it belongs.

13. A fixing base according to claim 12 characterised in that said slot (34) extends parallel to the axis (A') of the leg (24) of said lock transversely with respect to the arm (31) with which it is associated.

14. A fixing base according to claim 12 characterised in that said slot (34) extends perpendicularly to the axis (A') of the leg (24) of said lock, in the thickness of the arm (31) with which it is associated.

15. A fixing base according to claim 1 characterised in that extending over the lower face of each of the arms (31) of the lock forming the fixing member (23) is a web (63) of small thickness, which connects it to the associated leg (24) and which is deformable.

16. A fixing base according to claim 15 characterised in that said web (63) extends substantially in a triangular configuration along the mean diametral plane of the arm (31) with which it is associated.

17. A fixing base according to any one of claims 1 to 16 characterised in that the head (30) of the lock forming the fixing member (23) is diametrally provided with a slot (36) for producing the rotary movement thereof.

18. A fixing base according to claim 17 characterised in that said slot (36) is a blind slot, that is to say a slot whose ends do not open longitudinally to the exterior.

19. A fixing base according to any one of claims 1 to 18 characterised in that, above the plate (20), the leg (24) of the lock forming the fixing member (23) is provided at least locally in cross-section with two flats (60) which are disposed generally at mutually diametrally opposite positions substantially perpendicularly to the mean diametral plane of said arms (31).

20. A fixing base according to any one of claims 1 to 19 characterised in that the elastically deformable tongue portion (40, 40') carrying one of the retaining teeth extends transversely with respect to the plate (20) in cantilever relationship from a root region thereto (41, 41'), generally forming for same a pivot means having its axis parallel to that (A') of the fixing member (23).

21. A fixing base according to any one of claims 1 to 20 characterised in that the elastically deformable tongue portion (40, 40') carrying one of the two retaining teeth provided for the same shaped member is accessible from the exterior of the plate (20).

22. A fixing base according to claim 21 characterised in that said elastically deformable tongue portion (40, 40') extends flush with the upper face of the plate (20) and extends by means of an opening (42, 42') therein.

23. A fixing base according to either one of claims 21 and 22 characterised in that, at its free end, the elastically deformable tongue portion (40, 40') ccmprises an extension (43, 43') which extends to the edge of the plate (20) by means of a recess (44, 44') therein.

24. A fixing base according to any one of claims 1 to 23 characterised in that one at least of the retaining teeth (37-38, 37'-38') is locally supported transversely by at least one web (74) of small thickness which is deformable and which is thus capable of forming a brake in contact with the corresponding shaped member.

25. A fixing base according to claim 24 characterised in that a web (74) is thus provided at one at least of the ends of the retaining teeth (37-38, 37'-38') with which it is associated.

26. A fixing base according to any one of claims 1 to 25 characterised in that the other of the two retaining teeth provided for the same shaped member is carried by a rigid or semi-rigid wall (45, 45') of the plate (20).

27. A fixing base according to any one of claims 1 to 26 characterised in that two pairs of retaining teeth (37-38, 37'-38') are provided, for two different types of shaped member.

28. A fixing base according to claim 27 characterised in that the retaining teeth (37, 37') of said pairs which are each respectively carried by an elastically deformable tongue portion (40, 40') are disposed on the same side of the fixing member (23).

29. A fixing base according to claim 27 characterised in that said pairs of retaining teeth are disposed in different directions (X, Y) of the plate (20).

30. A fixing base according to claim 29 characterised in that said pairs of retaining teeth (37-38, 37'-38') are disposed in a crossed configuration, the two retaining teeth (37, 38) of a first pair extending transversely with respect to a first direction (X) of the plate (20) while the two retaining teeth (37', 38') of the second pair extend transversely with respect to a second direction (Y) of said plate (20) which is substantially perpendicular to the first.

31. A fixing base according to any one of claims 27 to 30 characterised in that, for one at least of the pairs of retaining teeth (37-38, 37'-38'), each of the retaining teeth is carried by an elastically deformable tongue portion (65, 66).

32. A fixing base according to any one of claims 1 to 31 characterised in that the two retaining teeth (37-38, 37'-38') provided for the same shaped member each respectively extend on respective sides of the lock forming the fixing member (23) transversely with respect to the plate (20)

33. A fixing base according to claim 32 characterised in that the retaining teeth (37-38, 37'-38') provided for the same shaped member are disposed at equal spacings from the axis of said lock whereby the same fixing axis is provided for the channel (11) irrespective of the type of said shaped member.

34. A fixing base according to claim 33 characterised in that support surfaces (49-50, 49'-50') are associated with the retaining teeth (37-38, 37'-38') parallel to the upper face of the plate (20), the support surfaces (49, 50) corresponding to a first type of shaped member are coplanar and one of the support surfaces (49', 50') corresponding to a second type of shaped member is disposed at the same spacing from said upper face of the plate (20) as the above-mentioned surfaces, whereby the same fixing plane is provided for the channel (11) irrespective of the type of shaped member.

# FIG.1

# FIG.2

# FIG.3

# FIG.4

# FIG.5

FIG.6A

FIG.6B

FIG.7A

FIG.7B

FIG.8

FIG.9

FIG.10

0 1 1 2 7 5 3

FIG.11

FIG.12

FIG.13

FIG.14

FIG.16

FIG.15